# EUROPEAN PATENT APPLICATION

(11) **EP 4 030 325 A1**
(43) Date of publication of application: **20.07.2022**
(21) Application number: 21216918.9
(22) Date of filing: 22.12.2021
(51) Int. Cl.: G06F 21/56

(54) **INFORMATION SYSTEM SECURITY**

(30) Priority: 19.01.2021 FI 20215060
(71) Applicant: Nokia Solutions and Networks Oy, 02610 Espoo (FI)
(72) Inventor: EL ABED, Haithem, 91620 Nozay (FR); MENSAH, Pernelle Cathel Sika, 91620 Nozay (FR); BOUTIGNY, Francois, 91620 Nozay (FR); PAPILLON, Serge, 75014 Paris (FR)
(74) Representative: Nokia EPO representatives

(57) **Abstract**

According to an example aspect of the present invention, there is provided a method, comprising running a multithread computer program and recording system calls thereby made to produce a test set of threads with their associated system calls, retrieving a mapping from the threads of the test set to reference threads of a database of reference threads, attempting to map, using the mapping, the threads of the test set to the reference threads of the database, and responsive to a first thread from among the threads of the test set not mapping to the reference threads of the database, flagging the first thread for a security action.

## Description

### FIELD

The present disclosure relates to detection of malicious behaviour in software and/or networked systems.

### BACKGROUND

Intrusion detection systems, IDS, monitor data originating in a computing system, such as a network or computing substrates, to identify malicious or unauthorized behaviour. They may do so by assessing if programs behave in manners which are considered suspicious, wherein the specific hallmarks of suspicious behaviour differ from implementation to implementation.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided a method, comprising running a multi-thread computer program and recording system calls thereby made to produce a test set of threads with their associated system calls, retrieving a mapping from the threads of the test set to reference threads of a database of reference threads, attempting to map, using the mapping, the threads of the test set to the reference threads of the database, and responsive to a first thread from among the threads of the test set not mapping to the reference threads of the database, flagging the first thread for a security action.

According to a second aspect of the present disclosure, there is provided a method comprising running a multi-thread computer program and recording system calls thereby made as a function of thread identifier to produce a database of reference threads with their associated system calls, running the multi-thread computer program and recording system calls thereby made as a function of thread identifier to produce a test set of threads with their associated system calls, the thread identifiers of the test set being different from the thread identifiers of the database, and running an optimization function on a set of constraints, the database and the test set to determine a mapping from the threads of the test set to the reference threads of the database.

According to a third aspect of the present disclosure, there is provided an apparatus comprising at least one processing core, at least one memory including computer program code, the at least one memory and the computer program code being configured to, with the at least one processing core, cause the apparatus at least to run a multi-thread computer program and record system calls thereby made as a function of thread identifier to produce a database of reference threads with their associated system calls, run the multi-thread computer program and record system calls thereby made as a function of thread identifier to produce a test set of threads with their associated system calls, the thread identifiers of the test set being different from the thread identifiers of the database, and run an optimization function on a set of constraints, the database and the test set to determine a mapping from the threads of the test set to the reference threads of the database.

According to a fourth aspect of the present disclosure, there is provided an apparatus comprising at least one processing core, at least one memory including computer program code, the at least one memory and the computer program code being configured to, with the at least one processing core, cause the apparatus at least to run a multi-thread computer program and record system calls thereby made to produce a test set of threads with their associated system calls, retrieve a mapping from the threads of the test set to reference threads of a database of reference threads, attempt to map, using the mapping, the threads of the test set to the reference threads of the database, and responsive to a first thread from among the threads of the test set not mapping to the reference threads of the database, flag the first thread for a security action.

According to a fifth aspect of the present disclosure, there is provided an apparatus comprising means for running a multi-thread computer program and recording system calls thereby made as a function of thread identifier to produce a database of reference threads with their associated system calls, means for running the multi-thread computer program and recording system calls thereby made as a function of thread identifier to produce a test set of threads with their associated system calls, the thread identifiers of the test set being different from the thread identifiers of the database, and means for running an optimization function on a set of constraints, the database and the test set to determine a mapping from the threads of the test set to the reference threads of the database.

According to a sixth aspect of the present disclosure, there is provided an apparatus, comprising means for running a multi-thread computer program and recording system calls thereby made to produce a test set of threads with their associated system calls, means for retrieving a mapping from the threads of the test set to reference threads of a database of reference threads, means for attempting to map, using the mapping, the threads of the test set to the reference threads of the database, and means for, responsive to a first thread from among the threads of the test set not mapping to the reference threads of the database, flagging the first thread for a security action.

According to a seventh aspect of the present disclosure, there is provided a non-transitory computer readable medium having stored thereon a set of computer readable instructions that, when executed by at least one processor, cause an apparatus to at least run a multi-thread computer program and record system calls thereby made as a function of thread identifier to produce a database of reference threads with their associated system calls, run the multi-thread computer program and record system calls thereby made as a function of thread identifier to produce a test set of threads with their associated system calls, the thread identifiers of the test set being different from the thread identifiers of the database, and run an optimization function on a set of constraints, the database and the test set to determine a mapping from the threads of the test set to the reference threads of the database.

According to an eighth aspect of the present disclosure, there is provided a non-transitory computer readable medium having stored thereon a set of computer readable instructions that, when executed by at least one processor, cause an apparatus to at least run a multi-thread computer program and record system calls thereby made to produce a test set of threads with their associated system calls, retrieve a mapping from the threads of the test set to reference threads of a database of reference threads, attempt to map, using the mapping, the threads of the test set to the reference threads of the database, and responsive to a first thread from among the threads of the test set not mapping to the reference threads of the database, flag the first thread for a security action.

According to a ninth aspect of the present disclosure, there is provided a computer program configured to cause a computer to perform at least the following, when run: running a multi-thread computer program and recording system calls thereby made as a function of thread identifier to produce a database of reference threads with their associated system calls, running the multi-thread computer program and recording system calls thereby made as a function of thread identifier to produce a test set of threads with their associated system calls, the thread identifiers of the test set being different from the thread identifiers of the database, and running an optimization function on a set of constraints, the database and the test set to determine a mapping from the threads of the test set to the reference threads of the database.

According to a tenth aspect of the present disclosure, there is provided a computer program configured to cause a computer to perform at least the following, when run: running a multi-thread computer program and recording system calls thereby made to produce a test set of threads with their associated system calls, retrieving a mapping from the threads of the test set to reference threads of a database of reference threads, attempting to map, using the mapping, the threads of the test set to the reference threads of the database, and responsive to a first thread from among the threads of the test set not mapping to the reference threads of the database, flagging the first thread for a security action.

### BRIEF DESCRIPTION OF THE DRAWINGS

FIGUREs 1A and 1B illustrate thread behaviour in accordance with at least some embodiments of the present invention;
FIGURE 2 illustrates at least some embodiments of the present invention;
FIGURE 3 illustrates an example apparatus capable of supporting at least some embodiments of the present invention;
FIGURE 4A is a flow graph illustrating a method in accordance with the present disclosure;
FIGURE 4B is a flow graph illustrating a method in accordance with the present disclosure;
FIGURE 5 is a flow graph of a method in accordance with at least some embodiments of the present invention, and
FIGURE 6 is a flow graph of a method in accordance with at least some embodiments of the present invention.

### EMBODIMENTS

Maliciously behaving software in a multi-thread environment may be detected by assessing the behaviour of individual threads, which may be compared to a baseline database of individual reference threads, wherein the reference threads are known to be benignly behaving threads. Using the database of reference threads, a technical effect and benefit is obtained in the ability to analyse individual threads in a multi-thread environment, resulting in a more efficient mechanism to flag suspiciously behaving software. In detail, a mapping is constructed which enables the association of observed threads with the known, benign reference threads in the baseline database.

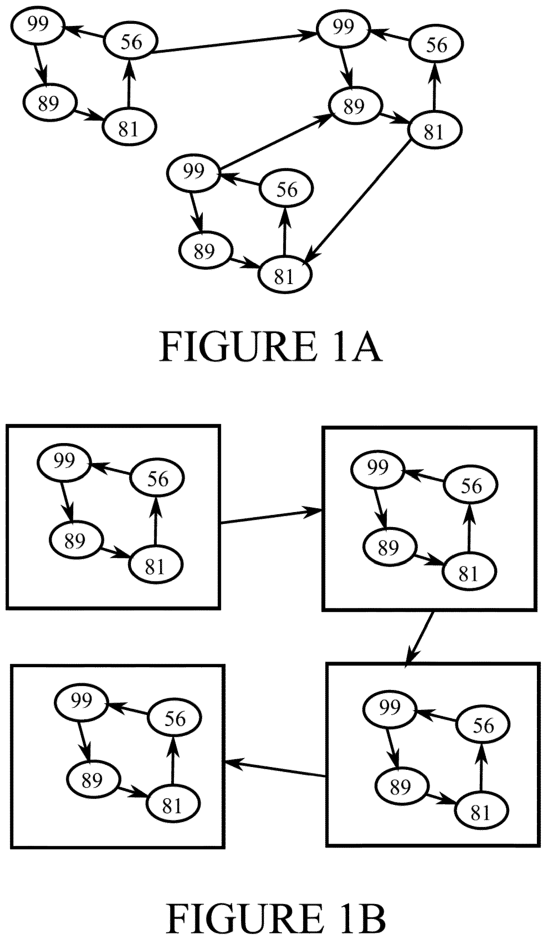

FIGURE 1A illustrates thread behaviour in accordance with at least some embodiments of the present invention. When implementing host-based intrusion detection, system and/or program events can be collected. A variety of data sources can be used for intrusion detection, one option being audit logs. However, system calls also form a usable and relevant data source. Indeed, the behaviour of an application can be characterized by, among other things, the system calls it emits during its functioning. System calls are used for interacting between the user space and the kernel of an operating system, wherefore they are descriptive of the intent of the computer program. In addition, their collection incurs only a relatively low overhead in the system, which is desirable in a real-time intrusion detection system.

In detection of deviations, the behaviour of the same computer program throughout multiple runs and throughout multiple environments is observed. When characterizing the behaviour of a program, attributes of the program that are invariant may be relied on. These are attributes that do not change from one execution of the program to another. Examples of invariant characteristics include the sequence of system calls made and the stack size used. Both of these attributes may be used to build a state machine representing the behaviour of the program that is usable in similarity/dissimilarity analysis in deviation detection. An example of an attribute that can vary from one execution to another, in other words which is not invariant, is the function call stack back trace in a stripped executable, wherein naming of functions is removed, as in this case function addresses change each time depending on where program sections are relocated in memory. The used stack size attribute correlates with the call stack back trace and is invariant from one execution to another of the same program. The present disclosure lays out an advanced behaviour baseline that decomposes behaviour of a multi-thread program along the thread and process axis.

In FIGURE 1A, a state diagram of a multi-thread program is graphically laid out. In detail, three threads invoking system calls with identifiers 99, 89, 81 and 56 are present. The numbers used here denote different system call types. As execution of the multi-thread program skips from thread to thread, the sequence of system calls may appear fairly chaotic and unpredictable. Each thread, taken separately, invokes system calls 99, 89, 81 and 56 in that sequence order. In real-life environments, complex applications may be deployed and the number of concurrent threads may be high. Indeed, the need to serve multiple clients at the same time, run tasks in parallel or reduce response time all incurs the need for several processes and/or threads to be executed at the same time. While in FIGURE 1A four copies of the same thread type are represented, in general threads of different types will run at the same time, presenting a more complicated overall system call sequence.

As a result, running even just one multi-thread program can cause system calls belonging to different threads to be interleaved in non-deterministic ways, depending on, among other factors, concurrent tasks running in current environment, failure cases or user actions. This generates a large quantity of normal behaviours for learning the correct, baseline behaviour of the multi-thread program, and necessitates tolerating a fairly wide range of behaviours during an IDS monitoring phase in order to lower the false positive rate of the intrusion detection system.

Many state of the art intrusion detection systems consider the processes, or containers, as a whole. In these cases, interleaved system calls of the threads result in a highly diverse set of observed behaviours. The baseline learned from all those behaviours may become so coarse that it encompasses normal as well as anomalous behaviours, allowing intruders to successfully masquerade as legitimate users. The high false negative rate from such intrusion detection facilitates the task of an attacker trying to mimic benign behaviour and impersonate legitimately running applications. In order to define the space of acceptable behaviours more precisely even for multi-process, multi-threaded applications, it is herein proposed to represent behaviours and baselines in a stratified way, isolating each thread. This provides the technical effect and benefit that maliciously acting programs have less leeway to mimic acceptable behaviour since the acceptable behaviour is more precisely defined. This increases security.

A challenge in isolating threads from each other in an intrusion detection system lies in the fact that identities assigned by the kernel to individual threads are dynamic. The threads are identified by a temporary unique ID, which may be known as a PID. Hence, all threads will be assigned new identifiers each time the same multi-thread program is executed.

Since a program needs to be launched several times to analyse its behaviour under different conditions, such as different test scenarios, it becomes difficult to map the threads across multiple runs, as the threads identifiers will change for each run. It is also difficult in monitoring mode to detect deviations between the recorded baseline of acceptable behaviour and the monitored behaviour, as they are likely to have different identifiers for the same thread types. Devising a way to reliably define the behaviour of an application over different runs is therefore of considerable interest. In a real-life situation, an application may further share a processing environment with other applications, further complicating the observed thread behaviour as system calls of different threads and applications are interleaved in non-deterministic ways. A mechanism to render the dynamically allocated thread identifiers effectively invariant would therefore enhance intrusion detection accuracy.

FIGURE 1B illustrates thread behaviour in accordance with at least some embodiments of the present invention. The figure illustrates a similar situation as in FIGURE 1A, however, the threads are isolated and when viewed in isolation, observing deviations from the regular behaviour of system calls 99, 89, 81 and 56 in this order becomes much easier. In other words, it becomes feasible to detect even slight variations in a system call sequence of a specific thread.

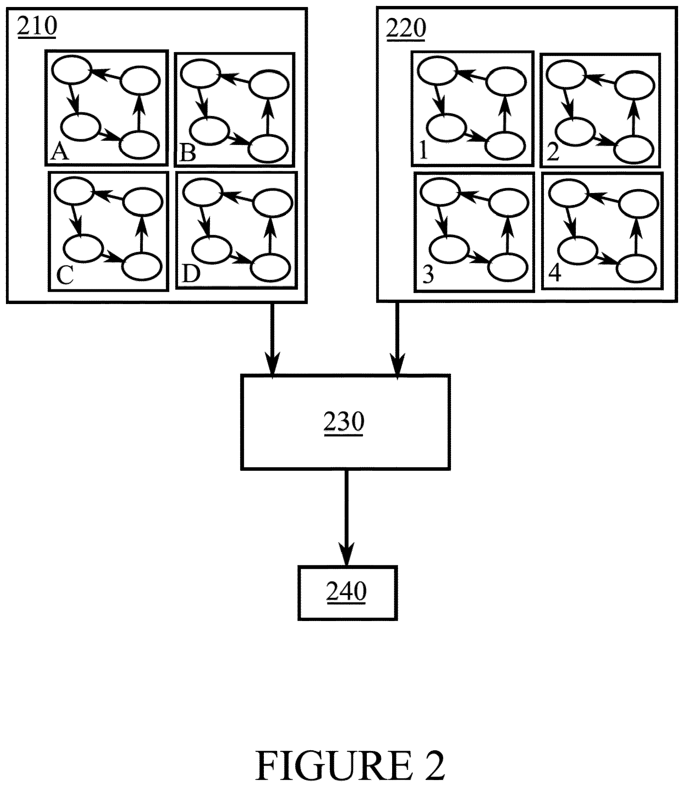

FIGURE 2 illustrates at least some embodiments of the present invention. The figure illustrates, on the left, a baseline set 210 of threads and their system calls, and on the right, a test set 220 of threads and their system calls. To build the baseline set 210, a multi-thread program is run and system calls are recorded per thread. In other words, for each thread included in baseline set 210, identified by its dynamically assigned thread identifier, the system call sequence of this thread is recorded. Subsequently, the thread identifiers allocated in the running of the multi-thread program are replaced with consecutive numbering, or another suitable indexing system. In principle, the thread identifiers may even be left as their original identifiers as well: in that case the thread type would be denoted with that type identifier going forward. In general, baseline set 210 is a database of thread types seen when the multi-thread program is run. For each thread type in baseline set 210, a system call sequence of the thread type is stored. In some embodiments, baseline set 210 need not include all thread types of the multi-thread program, for example, it may be configured to exclude threads which have a used stack size less than, or in excess of, a predefined threshold value, for example. In other embodiments, baseline set 210 includes all thread types observed when running the multi-thread program. The baseline set 210 is thus a database of thread types in the multi-thread program.

In at least some embodiments, context information is recorded for some, or all, the system calls recorded in baseline set 210. The context information may be observed, deduced or calculated, for example. An example of context information is a used stack size when the system call is invoked. The used stack size may be calculated, for example in a Linux operating system, OS, as follows. Threads in Linux OS share a same address space as the process they belong to. When a system call occurs, the current stack pointer address may be examined, but it is not initially known what stack is used. So, mapped memory ranges of the process may be examined, and the memory range that the stack pointer address belongs to may be selected. Then the stack pointer may be subtracted from the upper limit of the mapped address to obtain the used stack size at that particular moment when the system call is invoked. Other examples of information that may be used as context information is a thread name and activity over time of the thread invoking the system call.

Optionally, when building baseline set 210, duplicates of threads may be removed such that only one thread per thread type is included in the baseline set 210. So-called worker threads, for example, may be launched several times and may be identified using graph similarity or call tree similarity techniques, for example. It is in general sufficient that baseline set 210 comprises one representative thread per thread type in use in the multi-thread program. This produces the benefit that baseline set 210 takes less memory capacity to store, and intrusion detection may consume fewer processor cycles as the detection task is simpler with fewer thread types represented in the baseline set 210.

To build the test set 220, the same multi-thread program is run once, twice, or more than twice in a controlled environment. For example, the multi-thread program may be run five or ten times to build test set 220. In the test set 220, thread identifiers may be left as they are assigned dynamically by the operating system.

An optimization function 230 is run, the optimization function taking as inputs a set of constraints, the baseline set 210 and the test set 220. Optimization function 230 is configured to define a mapping from test set 220 to baseline set 210, such that each one of the threads in test set 210 is associated, by the mapping, with exactly one, and not more than one, of the threads in baseline set 210. The output of optimization function 230 is mapping 240 from test set 220 to baseline set 210. Removing duplicate threads from baseline set 210, as described above as an optional phase, may also assist in successfully performing the optimization as it makes baseline set 210 smaller. The mapping is more robust when the test set 220 comprises threads from more than one run of the multi-thread program, as the diversity of threads used in designing the mapping is in that case increased.

The mapping 240 takes as input characteristics of a thread in test set 220, and outputs an identifier of a thread in baseline set 210. As described above, the identifier of the thread in baseline set 210 may be an indexed identifier, for example. The characteristics used may include a sequence of system calls and/or other constraints, the constraints used in mapping 240 being selected from the constraints used by optimization function 230. In other words, mapping 240 may use some of the constraints used by optimization function 230, but it need not use all the constraints optimization function 230 considered when defining the mapping. Where context information of system calls is recorded, mapping 240 may take the context information as further input.

Examples of constraints usable by optimization function 230 and/or mapping 240 include an order in which threads are created, execution times of system calls, system call graphs, and system call trees. A system call graph denotes an order in which system calls are made in a specific thread, as illustrated in FIGUREs 1A and 2B. A system call tree denotes which system calls precede a specific system call. For example, a system call tree may specify that a system call of type 99 is preceded by only one system call, that preceding system call being of type 72, for example. At least one used system call constraint may comprise at least one of: a system call execution time constraint and at least one constraint on an execution sequence of system calls

Further, the constraints used by optimization function 230 and/or mapping 240 may include whether a thread has a name, and if so, optionally, what the name is, a periodicity in time at which the thread is launched (for example once per minute), a sequence of thread launches denoting which thread type is typically seen after another specific thread type, whether a specific thread type is a parent, or child, of another thread type, whether a thread is launched within a predetermined time interval after another thread type, whether a thread is launched at least a second predetermined interval after another thread type, and whether a thread is seen within a same episode as another thread type, wherein a timeline is divided into episodes (events occurring closely together in time).

Thus, for example, mapping 240 may associate a specific one of the threads in test set 220 with a thread in baseline set 210 based on a combination of thread name and a system call tree. As another example, mapping 240 may associate a specific one of the threads in test set 220 with a thread in baseline set 210 based on a combination of the thread being launched within a predetermined time (for example 20 milliseconds or 30 milliseconds) of a specific thread type and a system call graph of the thread. As a yet further example, mapping 240 may associate a specific one of the threads in test set 220 with a thread in baseline set 210 based on a combination of the thread being launched within a predetermined time from any thread invoking a specific type of system call and the thread being a child of another thread, which need not be the thread which invoked the specific type of system call. Thus for example, mapping 240 may start by associating a specific thread in test set 220 with a thread in baseline set 210 based on a thread name, then associating a set of threads in test set 220 with a set of threads in baseline set 210 based on a common parenthood to the above named thread. Then the mapping 240 may proceed by associating a subset of the associated thread set above from the test set 220 with the subset of the thread set from baseline set 210 based on the occurrence of these threads within the same episode in time. The process may continue recursively using relevant constraints until a one to one mapping from the above thread set in the test set 220 is associated to the thread set in baseline set 210.

Subsequently, the baseline set 210 and mapper 240 may be used during a monitoring phase to map threads seen in a computing substrate to known thread types in baseline set 210. Threads which do not map to any thread in baseline set 210 may be flagged as suspicious, terminated or merely recorded in a log, depending on the application. In general, a security action may be taken concerning an unmapped thread, the exact nature of the security action depending on the application and its sensitivity. In some embodiments the monitoring is separate from acting on the findings, in these cases the monitoring may simply flag the non-mapped thread for a security action. The security action, which may be performed in a separate module, may comprise terminating the thread or merely recording it in a log, for example. In other embodiments, the monitoring entity is also configured to perform the security action on the thread.

Overall, the separation of individual threads is beneficial in reducing the rate of false positives and false negatives in intrusion detection. As such, the mapping of occurring threads to thread types known to reflect benign behaviour greatly increases the accuracy of intrusion detection. The mapping of the threads may be performed automatically, for example during live monitoring of software as it executed in a computing substrate. A new baseline set may be determined whenever the multi-thread program is updated to a new version, for example, which provides a benefit as the baseline may be automatically generated using the process described herein above.

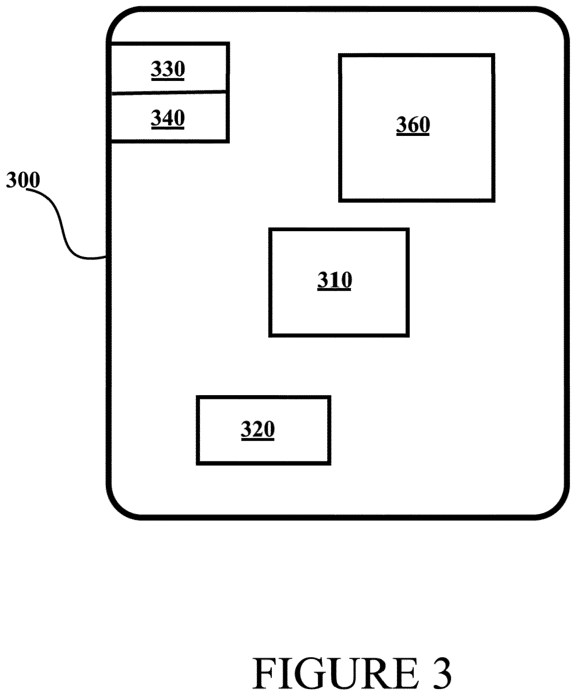

FIGURE 3 illustrates an example apparatus capable of supporting at least some embodiments of the present invention. Illustrated is device 300, which may comprise, for example, computing substrate used to run the multi-thread computer program. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Zen processing core designed by Advanced Micro Devices Corporation. Processor 310 may comprise at least one Intel Xeon and/or AMD Threadripper processor. Processor 310 may comprise at least one application-specific integrated circuit, ASIC. Processor 310 may comprise at least one field-programmable gate array, FPGA. Processor 310 may be means for performing method steps in device 300, such as running, retrieving, mapping and taking, for example. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile device or a server, to perform various functions) and (c) hardware circuit(s) and or processor(s), such as a microprocessors) or a portion of a microprocessors), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to configure intruder detection parameters.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver. Device 300 may comprise further devices not illustrated in FIGURE 3.

Processor 310, memory 320, transmitter 330, receiver 340 and/or UI 360 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present disclosure.

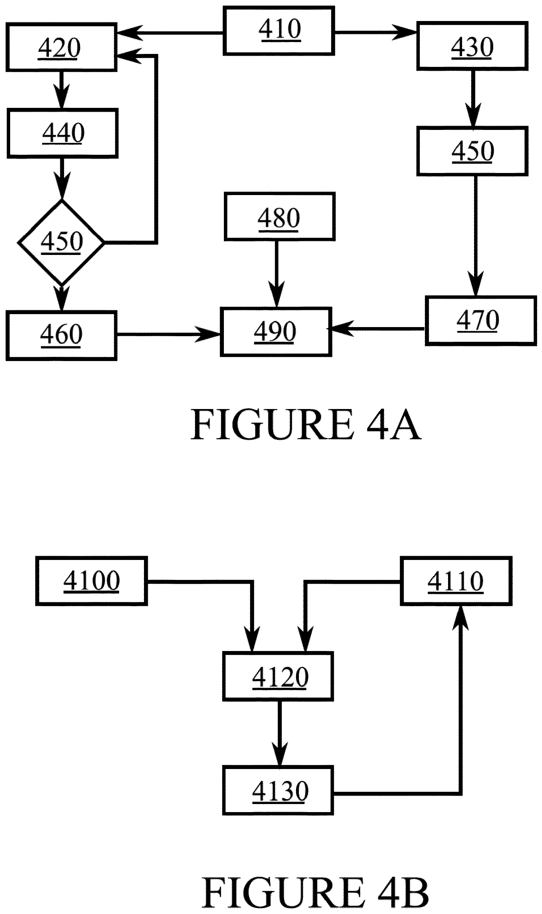

FIGURE 4A is a flow graph illustrating a method in accordance with the present disclosure. In phase 410, a computing substrate is prepared to run the multi-thread program. The test set 220 is established via phase 420, where the program is run and threads and their system calls are recorded. Thread identifiers may be left in their original state, as discussed herein above. The test set 220 is saved in phase 440, and in phase 450 it is determined, if the test set 220 has enough data. In case more data is needed, processing returns from phase 450 to phase 420 and the multi-thread program is run once more to generate more thread data. In case the test set 220 is sufficiently large, processing advances to phase 460, from where the stored test set is sent to optimization function 490.

On the other hand, the baseline set 210 is established via phase 430, where the multi-thread program is run and, optionally, thread identifiers are replaced with an indexing system, such as consecutive natural numbers, for example. Duplicate threads may be eliminated from the baseline set to save memory resources, as described herein above, and the baseline set is stored in phase 450. In phase 470 the baseline set is sent to optimization function 490. The constraint set 480 is also provided to optimization function 490 as input, and the optimization function will generate a mapping as output, as described herein above.

In general, there are plural ways to define the mapping from the test set to the baseline set. An optimal mapping may be one which uses relatively few system resources, such as processor cycles, and/or a mapping which uses the fewest number of constraints and still results in the correct mapping. In general, the herein disclosed intrusion detection system will function with more than one of the possible mappings, indeed the optimization function may be configured to prioritize certain characteristics of the resulting mapping, such as which constraints to use, based on the kind of malicious behaviour that it is most intended to detect using the resulting mapping. As one example, the optimization function 490 may first arrive at a candidate mapping which maps the threads of test set 220 to baseline set 210 correctly, and then minimize a cost variable which reflects the computational cost and/or complexity of the candidate mapping, while ensuring that the candidate mapping still maps the threads correctly. The candidate mapping corresponding to a minimum of the cost variable may then be selected as the mapping output from optimization function 490.

FIGURE 4B is a flow graph illustrating a method in accordance with the present disclosure. FIGURE 4B relates to the monitoring phase. In phase 4100, the baseline set 210 is retrieved and provided to the mapper, and in phase 4110 data captured during execution of live software is harvested and likewise provided to the mapper. In phase 4120, the mapper tries to map each one of the threads in the data from phase 4110 to one of the threads in the baseline set 210, obtained in phase 4100. In case a thread is not successfully mapped, it may be a maliciously behaving thread, or it may be, for example, a user behaving in a novel manner which was not recorded in the baseline set. In 4130 it is determined, if monitoring is to cease, and if not, more thread data is harvested from the execution of the live software through phase 4110.

In general, the derivation of the mapping in the optimization function, the monitoring and the performing of security actions on non-mapped threads may all be performed in separate entities. On the other hand, any two of them may be performed in a same entity, and also, it is possible that a single entity performs all three actions.

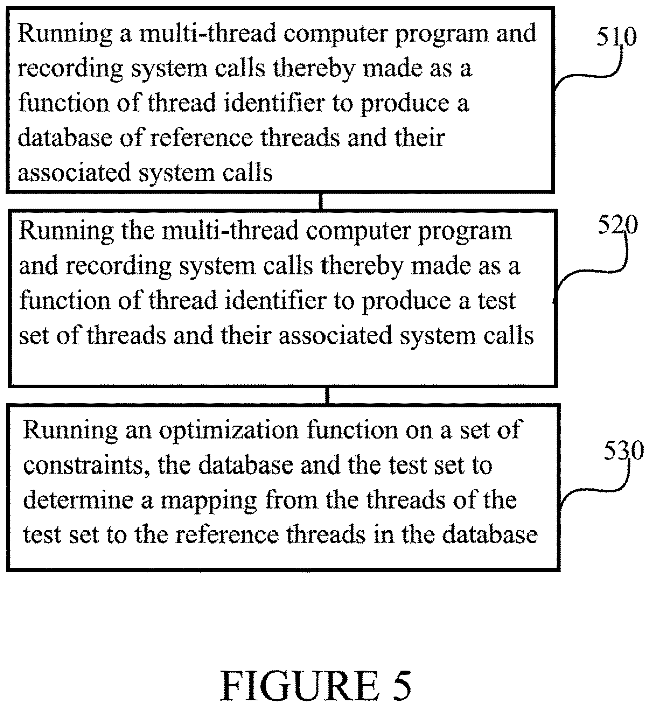

FIGURE 5 is a flow graph of a method in accordance with at least some embodiments of the present invention. Phase 510 comprises firstly running a multi-thread computer program and recording system calls thereby made as a function of thread identifier to produce a database of reference threads with their associated system calls. Phase 520 comprises running the multi-thread computer program and recording system calls thereby made as a function of thread identifier to produce a test set of threads with their associated system calls, the thread identifiers of the test set being different from the thread identifiers of the database. Running the multi-thread computer program to produce the test set may comprise running the multi-thread computer program at least twice. Phase 530 comprises running an optimization function on a set of constraints, the database and the test set to determine a mapping from the threads of the test set to the reference threads of the database. The optimization function may be configured to produce the mapping such that it minimizes the number of constraints needed to map all the threads of the test set to the reference threads of the database. Phases 510 and 520 may take place in either order, either phase 510 first and phase 520 then, or phase 520 first and phase 510 then.

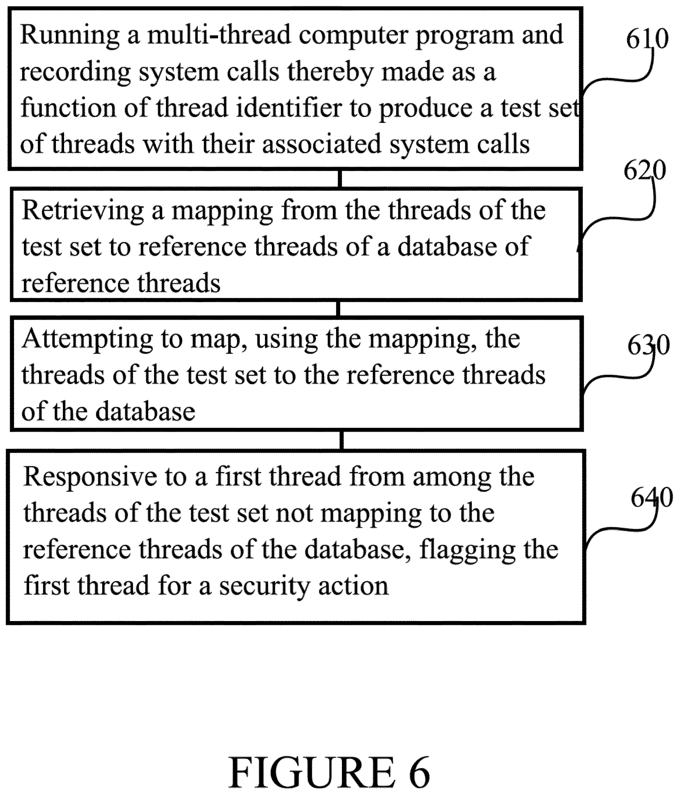

FIGURE 6 is a flow graph of a method in accordance with at least some embodiments of the present invention. Phase 610 comprises running a multi-thread computer program and recording system calls thereby made to produce a test set of threads with their associated system calls. Phase 620 comprises retrieving a mapping from the threads of the test set to reference threads of a database of reference threads. Phase 630 comprises attempting to map, using the mapping, the threads of the test set to the reference threads of the database. Finally, phase 640 comprises, responsive to a first thread from among the threads of the test set not mapping to the reference threads of the database, flagging the first thread for a security action.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in enhancing computing system security.

### ACRONYMS LIST

- IDS: intrusion detection systems
- PID: process identifier (used to identify threads)

**REFERENCE SIGNS LIST**

| | |
|---|---|
| 99, 89, 81, 56 | examples of system call identifiers |
| 210 | baseline set (database) |
| 220 | test set |
| 230 | optimization function |
| 240 | mapping |
| 300 - 360 | structure of the device of FIGURE 3 |
| 410 - 490 | phases of the process of FIGURE 4A |
| 4100 - 4130 | phases of the process of FIGURE 4B |
| 510- 530 | phases of the method of FIGURE 5 |
| 610 - 640 | phases of the method of FIGURE 6 |

## Claims

1. A computer-implemented method, comprising:
- running a multi-thread computer program and recording system calls thereby made to produce a test set of threads with their associated system calls;
- retrieving a mapping from the threads of the test set to reference threads of a database of reference threads;
- attempting to map, using the mapping, the threads of the test set to the reference threads of the database, and
- responsive to a first thread from among the threads of the test set not mapping to the reference threads of the database, flagging the first thread for a security action.

2. The method according to claim 1, wherein the security action comprises at least one of: adding data identifying the first thread to a log, informing human operators of the first thread, reducing an operating priority of the first thread and terminating the first thread.

3. The method according to any of claims 1 - 2, further comprising recording context information of at least some of the system calls made by threads in the test set.

4. The method according to any of claims 1 - 3, wherein the mapping uses constraints including at least one of: a thread creation order constraint, a fixed periodicity of thread launches, a thread being launched during a specific episode in time and at least one system call constraint.

5. The method according to claim 4, wherein the at least one system call constraint comprises at least one of: a system call execution time constraint and at least one constraint on an execution sequence of system calls.

6. A computer-implemented method comprising:
- running a multi-thread computer program and recording system calls thereby made as a function of thread identifier to produce a database of reference threads with their associated system calls;
- running the multi-thread computer program and recording system calls thereby made as a function of thread identifier to produce a test set of threads with their associated system calls, the thread identifiers of the test set being different from the thread identifiers of the database, and
- running an optimization function on a set of constraints, the database and the test set to determine a mapping from the threads of the test set to the reference threads of the database.

7. The method according to claim 6, wherein the set of constraints comprises at least one of the following: a thread creation order constraint, a fixed periodicity of thread launches, a thread being launched during a specific episode in time and at least one system call constraint.

8. The method according to any of claims 6 - 7, further comprising recording context information of at least some of the system calls made by the reference threads in the database of reference threads and recording context information of at least some of the system calls made by threads in the test set.

9. An apparatus comprising means to cause the apparatus at least to:
- run a multi-thread computer program and record system calls thereby made as a function of thread identifier to produce a database of reference threads with their associated system calls;
- run the multi-thread computer program and record system calls thereby made as a function of thread identifier to produce a test set of threads with their associated system calls, the thread identifiers of the test set being different from the thread identifiers of the database, and
- run an optimization function on a set of constraints, the database and the test set to determine a mapping from the threads of the test set to the reference threads of the database.

10. The apparatus according to claim 9, wherein the set of constraints comprises at least one of the following: a thread creation order constraint, a fixed periodicity of thread launches, a thread being launched during a specific episode in time and at least one system call constraint.

11. The apparatus according to any of claims 9 - 10, wherein the at least one memory and the computer program code are configured to, with the at least one processing core, further record context information of at least some of the system calls made by reference threads in the database of reference threads and record context information of at least some of the system calls made by threads in the test set.

12. An apparatus comprising means to cause the apparatus at least to:
- run a multi-thread computer program and record system calls thereby made to produce a test set of threads with their associated system calls;
- retrieve a mapping from the threads of the test set to reference threads of a database of reference threads;
- attempt to map, using the mapping, the threads of the test set to the reference threads of the database, and
- responsive to a first thread from among the threads of the test set not mapping to the reference threads of the database, flag the first thread for a security action.

13. The apparatus according to claim 12, wherein the security action comprises at least one of: adding data identifying the first thread to a log, informing human operators of the first thread, reducing an operating priority of the first thread and terminating the first thread.

14. The apparatus according to any of claims 12 - 13, wherein the at least one memory and the computer program code are configured to, with the at least one processing core, further record context information of at least some of the system calls made by threads in the test set.

15. The apparatus according to any of claims 12 - 14, wherein the mapping uses constraints including at least one of: a thread creation order constraint, a fixed periodicity of thread launches, a thread being launched during a specific episode in time and at least one system call constraint.
